# EUROPÄISCHE PATENTSCHRIFT

(11) **EP 0 445 428 B1**
(45) Veröffentlichungstag und Bekanntmachung des Hinweises auf die Patenterteilung: **12.10.1994**
(21) Anmeldenummer: 90125383.1
(22) Anmeldetag: 22.12.1990
(51) Int. Cl.: F16F 7/08, D06F 37/20

(54) **Reibungs-Schwingungsdämpfer**
Friction and vibration damper
Amortisseur de vibrations à friction

(30) Priorität: 09.02.1990 DE 4003890
(43) Veröffentlichungstag der Anmeldung: 11.09.1991
(73) Patentinhaber: SUSPA COMPART Aktiengesellschaft, D-90518 Altdorf (DE)
(72) Erfinder: Bauer, Hans Jürgen, W-8503 Altdorf (DE); Bauer, Hans-Peter, W-8503 Altdorf (DE); Mayer, Dieter, W-8458 Sulzbach-Rosenberg (DE); Stadelmann, Ludwig, W-8503 Altdorf (DE)
(74) Vertreter: Rau, Manfred, Dr. Dipl.-Ing.

(56) Entgegenhaltungen:
- EP-A- 0 236 204
- EP-A- 0 277 788
- DE-A- 3 016 915
- FR-A- 843 992
- FR-A- 936 113
- US-A- 2 715 952

## Beschreibung

Die Erfindung betrifft einen Reibungs-Schwingungsdämpfer nach dem Oberbegriff des Patentanspruches 1.

Aus der EP-A3-0 277 788 ist ein Schwingungsdämpfer der im Oberbegriff des Anspruches 1 vorausgesetzten Art bekannt, und zwar in einer Anwendung für das Fahrwerk eines Kraftfahrzeuges. Hierbei ist innerhalb des Stößels ein Stellglied in Form eines Kegelstumpfes vorgesehen, das in Ausnehmungen des Stößels gelagerte Kugeln gegen die Innenseite des Reibbelages drückt und damit bei Verschiebungen des Spreizgliedes den Reibbelag gegen die Wand des Gehäuses drückt. Diese Lösung ist sehr aufwendig und insbesondere bei Einsatz von Reibbelägen aus weichem Material ungeeignet.

Aus der DE-A1-30 16 915 sind weiterhin Reibungs-Schwingungsdämpfer bekannt, die - gleichermaßen wie die erfindungsgemäßen Schwingungsdämpfer - bevorzugt in Waschmaschinen eingesetzt werden, deren Waschaggregat bevorzugt mit horizontaler Trommelachse, weitgehend frei schwingungsfähig abgestützt ist. Ein Grundproblem der einerseits mit einer niedrigen unterkritischen Waschdrehzahl und andererseits mit einer hohen überkritischen Schleuderdrehzahl antreibbaren Waschmaschinen besteht darin, daß mit zunehmender Drehzahl die vom Schwingungsdämpfer erzeugten Dämpfungskräfte etwa konstant bleiben. Die erforderlichen Dämpfungskräfte nehmen dagegen mit steigender Drehzahl zu, bis die sogenannte kritische Drehzahl erreicht ist, während die erforderlichen Dämpfungskräfte nach Überschreiten der kritischen Drehzahl stark abnehmen und sich dann asymptotisch einem konstanten, systemabhängigen Wert nähern. In diesen hohen Drehzahlbereichen können zu hohe Dämpfungskräfte zu einer Kopplung zwischen dem schwingenden Waschaggregat und dem Maschinengestell mit der Folge führen, daß dieses anfängt zu springen. Weiterhin werden die mechanischen Belastungen der Abstützung sehr hoch, so daß es hier zu Dauerbrüchen kommen kann.

Um dieses Problem zu beseitigen, ist bei der bekannten schwingungsfähigen Abstützung eine Unwuchterfassungseinrichtung vorgesehen, die beispielsweise die Drehzahl der Trommel des Waschaggregates erfaßt. Von hier wird ein Stellglied außerhalb des Schwingungsdämpfers angesteuert, das wiederum mittels einer Stange, eines Bowdenzuges od.dgl. den Reibungskolben mehr oder weniger spreizt, wodurch die Dämpfungscharakteristik des Schwingungsdämpfers verändert wird. Dieses Prinzip ist sehr vorteilhaft; der Aufwand hierfür ist aber sehr groß.

Der Erfindung liegt die Aufgabe zugrunde, einen Schwingungsdämpfer der gattungsgemäßen Art so auszugestalten, daß er besonders einfach aufgebaut ist.

Diese Aufgabe wird, ausgehend von der Gattung, erfindungsgemäß durch die Merkmale im Kennzeichnungsteil des Anspruches 1 gelöst. Der durch die erfindungsgemäßen Maßnahmen erreichte Aufbau ist außerordentlich einfach und betriebssicher. Dadurch, daß der Stellmotor im Stößel des Reibungsdämpfers angeordnet ist, erfolgt eine unmittelbare Veränderung der Aufspreizung des Reibungskolbens und damit der Dämpfungscharakteristik. Es sind keine aufwendigen Übertragungen von außen notwendig; lediglich eine elektrische Ansteuerleitung ist erforderlich. Der Anspruch 2 gibt einen ganz besonders geeigneten Stellmotor wieder, mit dem bei ausreichenden Verstellwegen hohe Verstellkräfte erzeugt werden können. Derartige Stellmotoren haben keine mechanischen Verschleißteile, haben also entsprechend hohe Lebensdauer bei außerordentlich geringem Gewicht. Die Wahl eines speziellen Stellmotors hat weiterhin zur Folge, daß eine unmittelbare Beaufschlagung des Spreizgliedes nach Anspruch 3 möglich ist.

Bei der Ausgestaltung nach Anspruch 4 bedarf es nicht mehr eines Übertragungsgliedes zwischen Stellmotor und Spreizglied. Etwas Derartiges ist bei der Ausgestaltung nach Anspruch 5 notwendig, dafür befindet sich der Stellmotor in einem Bereich des Stößels, der fast keine Bewegungen mehr ausführt, da der Einbau solcher Schwingungsdämpfer in Waschmaschinen immer in der Weise erfolgt, daß der Stößel am Maschinengestell angelenkt wird. Der Bereich benachbart zum Anlenkelement des Stößels führt daher nur Drehschwingungen sehr geringer Amplitude aus. Wegen der großen Kräfte, die der erfindungsgemäß ausgewählte Stellmotor ausüben kann, bedarf er einer guten Abstützung im Stößel, wie es Anspruch 6 vorgibt. Die Ansprüche 7 und 8 geben besonders vorteilhafte Ausgestaltungen des Reibungskolbens im Hinblick auf den Stellantrieb wieder. Durch die Maßnahmen nach Anspruch 9 und 10 wird sichergestellt, daß die elektrischen Leitungen zur Versorgung der Heizung des Dehnstoffelementes nur ganz geringen dynamischen Belastungen ausgesetzt werden.

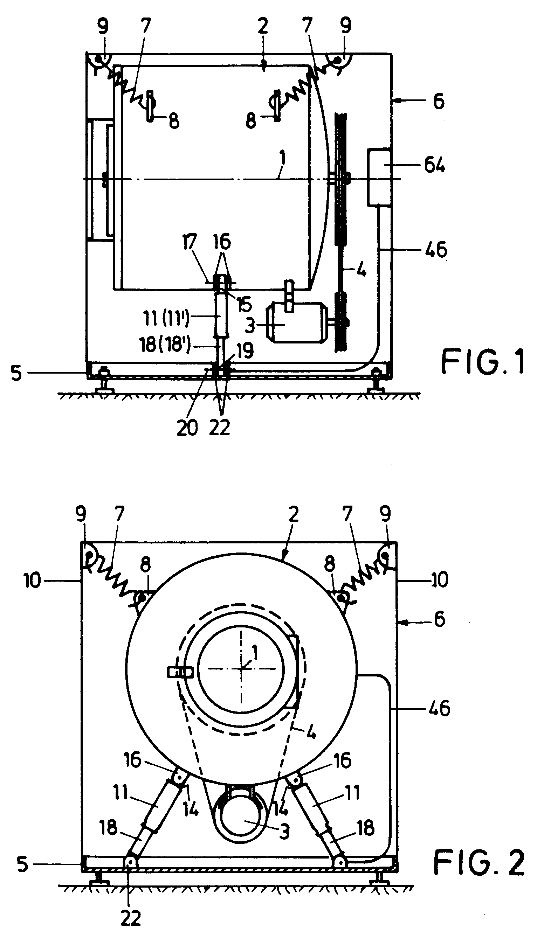

Weitere Einzelheiten der Erfindung ergeben sich aus der nachfolgenden Beschreibung von Ausführungsbeispielen anhand der Zeichnung, wobei das Ausführungsbeispiel nach den Fig. 3 bis 6 nicht der Erfindung entspricht. Es zeigt
- Fig. 1: eine Trommelwaschmaschine in schematischer Darstellung in Seitenansicht,
- Fig. 2: die Trommelwaschmaschine gemäß Fig. 1 in Vorderansicht,
- Fig. 3: eine erste Ausführungsform eines Schwingungsdämpfers im Teil-Längsschnitt,
- Fig. 4: einen Querschnitt durch Fig. 3 gemäß der Schnittlinie IV-IV in Fig. 3,
- Fig. 5: einen Querschnitt durch Fig. 3 entsprechend der Schnittlinie V-V in Fig. 3,
- Fig. 6: einen Querschnitt durch Fig. 3 entsprechend der Schnittlinie VI-VI in Fig. 3,
- Fig. 7: eine zweite Ausführungsform eines Schwingungsdämpfers im Teil-Längsschnitt,
- Fig. 8: einen Querschnitt durch Fig. 7 entsprechend der Schnittlinie VIII-VIII in Fig. 7 und
- Fig. 9: eine Teil-Draufsicht auf den Reibungskolben des Schwingungsdämpfers nach Fig. 7, wobei das Widerlager und der Reibungsbelag nicht montiert sind.

Eine Trommelwaschmaschine mit waagerechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen gebildeten Maschinengestell 5 abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 10 des Gehäuses 6 ausgebildet sind.

Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP-A-0 108 217 bekannt sind. Entscheidend ist, daß das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 bzw. 11' angeordnet, bei denen es sich um Reibungsdämpfer handelt, die nachfolgend genauer beschrieben werden.

Bei beiden nachfolgend geschilderten Ausführungsbeispielen weist der Schwingungsdämpfer 11 bzw. 11' ein Gehäuse 12 auf. Das Gehäuse 12 besteht im wesentlichen aus einem zylindrischen Rohr 13, das an einem Ende mittels eines Bodens 14 verschlossen ist. An der Aussenseite des Bodens 14 ist eine Gelenkbüchse 15 als Anlenkelement angebracht, mittels derer der Schwingungsdämpfer 11 bzw. 11' an einem entsprechenden Lager 16 am Waschaggregat 2 so angebracht wird, daß der Schwingungsdämpfer 11 bzw. 11' um eine Schwenkachse 17 relativ zum Waschaggregat 2 schwenkbar ist, die parallel zur Trommelachse 1 verläuft.

Der jeweilige Schwingungsdämpfer 11 bzw. 11' weist weiterhin einen Stößel 18 bzw. 18' auf, der an seinem äußeren Ende ebenfalls eine Gelenkbüchse 19 aufweist, deren Schwenkachse 20 gleichermaßen wie die Schwenkachse 17 die Mittel-Längs-Achse 21 des jeweiligen Schwingungsdämpfers 11 bzw. 11' senkrecht schneidet. Mit dieser Gelenkbüchse 19 wird der Schwingungsdämpfer 11 bzw. 11' in einem am Maschinengestell 5 angebrachten Lager 22 in der Weise schwenkbar festgelegt, daß die Schwenkachse 20 ebenfalls parallel zur Trommelachse 1 verläuft.

Da die Stößel 18 bzw. 18' der beiden dargestellten Ausführungsbeispiele sich in ihrem Aufbau unterscheiden, werden diese nachfolgend getrennt erläutert.

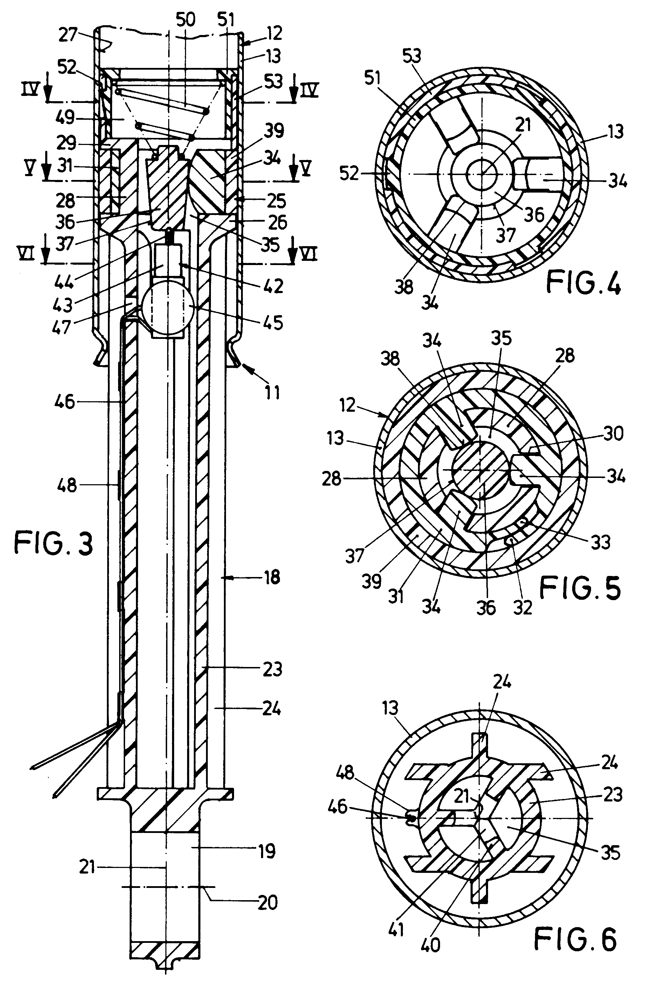

In dem Ausführungsbeispiel nach den Fig. 3 bis 6 weist der Stößel 18 ein im wesentlichen zylindrisches Rohr 23 auf, das durch einige äußere Rippen 24 ausgesteift ist und an dessen äußerem Ende die Gelenkbüchse 19 ausgebildet ist. Der Stößel 18 ist einstückig aus Kunststoff gespritzt.

An dem im Gehäuse 12 befindlichen inneren Ende des Stößels 18 ist ein Reibungskolben 25 ausgebildet. Dieser Reibungskolben 25 weist einen der Gelenkbüchse 19 zugewandten Gegenhalteflansch 26 auf, der an seinem Aussenumfang ringzylindrisch ausgeführt ist und etwa bis zur Innenwand 27 des Gehäuses 12 reicht, gegenüber dieser aber ein gewisses Spiel hat. Der Reibungskolben 25 weist weiterhin drei Teil-Ringzylinder-Stege 28 auf, die sich konzentrisch zur Achse 21 erstrecken und an deren Ende ein weiterer Gegenhalteflansch 29 ausgebildet ist, der sich ebenfalls bis in die unmittelbare Nähe der Innenwand 27 des Gehäuses 12 erstreckt. Die beiden Gegenhalteflansche 26 und 29 und die Teil-Ringzylinder-Stege 28 sind ebenfalls einstückig mit dem Stößel 18 ausgebildet. Zwischen den Stegen 28 sind Ausnehmungen 30 ausgebildet.

Zwischen den beiden Gegenhalteflanschen 26,29 und auf den Stegen 28 ist eine aufweitbare Spreizhülse 31 angeordnet, die - wie aus Fig. 5 hervorgeht - zwei einander tangential zur Achse 21 überlappende, nicht miteinander verbundene Wandbereiche 32,33 aufweist, die also tangential zur Achse 21 gegeneinander verschoben werden können. Die Spreizhülse 31 ist weiterhin mit drei Spreizstegen 34 versehen, die radial zur Achse 21 verlaufen und durch die Ausnehmungen 30 hindurch in den Innenraum 35 des Stößels 18 ragen. Sie bildet gegenüber dem Stößel 18 ein gesondertes Bauteil.

Zwischen diesen Spreizstegen 34 ist ein Spreizkeil 36 angeordnet, der die Form eines sich zur Gelenkbüchse 19 verjüngenden Kegelstumpfes aufweist und der mit seiner kegelstumpfförmigen bzw. konusförmigen Außenfläche 37 gegen die zugewandten Spreizflächen 38 der Spreizstege 34 anliegt, wie insbesondere den Fig. 3 und 5 entnehmbar ist. Auf der Spreizhülse 31 ist ein Reibbelag 39 angeordnet, der aus einem zelligen, elastischen Schaumstoff, beispielsweise einem Polyurethan-Schaumstoff besteht. Er kann in Form einer ringzylindrischen Hülse ausgebildet sein, oder aber lediglich als Streifen um die Spreizhülse 31 herumgelegt sein. In Richtung der Achse 21 stützt er sich gegen die beiden Gegenhalteflansche 26,29 ab.

Im Innenraum 35 des Rohres 23 des Stößels 18 sind sternförmig verlaufende Stege 40 einstückig mit dem Rohr 23 ausgebildet, zwischen denen benachbart zum Spreizkeil 36 eine zylindrische Ausnehmung 41 ausgebildet ist, die konzentrisch zur Achse 21 verläuft. In dieser dem Spreizkeil 36 zugewandten Ausnehmung 41 ist ein als Stellmotor 42 dienendes sogenanntes Dehnstoffelement angeordnet. Es weist ein im wesentlichen zylindrisches Gehäuse 43 auf, das sich in der Ausnehmung 41 radial und insbesondere axial in Richtung zur Gelenkbüchse 19 abstützt. Das Gehäuse 43 ist mit einem wachsartigen Material gefüllt, das sich bei Erwärmung stark ausdehnt und einen Kolben 44 aus dem Gehäuse 43 ausschiebt, bzw. diesen Kolben 44 in das Gehäuse 43 hineinzieht, wenn der Dehnstoff sich abkühlt. Derartige Dehnstoffelemente sind bekannt und handelsüblich, beispielsweise von der Firma ELTEK Spa in Casale, Italien. Am Gehäuse 43 ist eine elektrische Heizung 45 angebracht, die über zwei Leitungen 46 mit elektrischem Strom versorgt werden kann. Diese Leitungen 46 sind durch eine Öffnung 47 im Rohr 23 nach außen geführt, die gleichzeitig auch als Entlüftungsöffnung dient. Die Leitungen 46 sind an der Außenwand einstückig in mit dem Rohr 23 ausgebildeten Klammern 48 elastisch klemmend gehalten und werden bis in die Nähe der Gelenkbüchse 19 geführt. Wenn die Heizung 45 durch entsprechende Stromzufuhr geheizt und damit der im Gehäuse 43 befindliche Dehnstoff erwärmt wird, dann fährt der Kolben 44 aus dem Gehäuse 43 aus und verschiebt den Spreizkeil 36 in Richtung zum Innenraum 49 des Gehäuses 12. In Fig. 3 ist die Ruhelage des Kolbens 44 und des Spreizkeils 36 dargestellt, in der die Heizung 45 nicht mit Strom versorgt wird.

Der Spreizkeil 36 stützt sich auf seiner dem Stellmotor 42 entgegengesetzten Seite gegen eine vorgespannte Kegel-Druckfeder 50 ab, die sich wiederum gegen ein hülsenförmiges Widerlager 51 abstützt, das elastisch mittels nasenförmiger Vorsprünge 52 in den sich vom Rohr 23 über den Reibungskolben 25 hinaus anschließenden Endbereich 53 des Stößels 18 einrastbar ist. Die Druckfeder 50 schiebt den Spreizkeil 36 in Richtung zum Stellmotor 42, so daß die Spreizhülse 31 und damit auch der Reibbelag 39 radial aufgeweitet wird. In dieser Stellung wird eine maximale Reibungskraft zwischen dem Reibbelag 39 und der Innenwand 27 des Gehäuses 12 erzeugt, wenn der Stößel 18 relativ zum Gehäuse 12 verschoben wird, wenn also das Waschaggregat 2 Schwingbewegungen relativ zum Maschinengestell 5 ausführt. Wenn dagegen die elektrische Heizung 45 mit Strom versorgt wird, verschiebt der Kolben 44 den Spreizkeil 36 in entgegengesetzter Richtung gegen die Kraft der vorgespannten Druckfeder 50, wodurch die Spreizung der Spreizhülse 31 und damit des Reibbelages 39 reduziert wird, d.h. die Reibungskraft des Reibbelages 39 an der Innenwand 27 des Gehäuses 12 wird geringer.

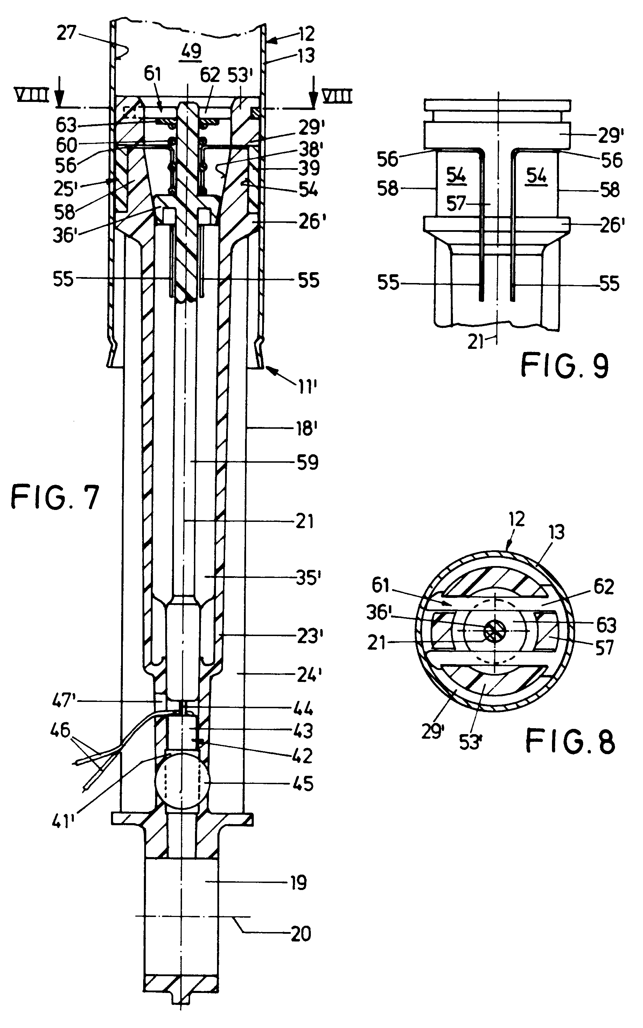

Der Schwingungsdämpfer 11' nach den Fig. 7 bis 9 weist ebenfalls ein mit Rippen 24' ausgesteiftes Rohr 23' auf, an dessen äußerem Ende die Gelenkhülse 19 einstückig ausgebildet ist.

An dem im Innenraum 49 des Gehäuses 12 befindlichen Ende ist der Stößel 18' mit einem Reibungskolben 25' versehen, der im wesentlichen einstückig mit dem Stößel 18' ausgebildet ist. Er weist eine im wesentlichen ringzylindrische Auflagefläche 54 für einen Reibbelag 39 auf. Axial ist dieser Auflagefläche 54 jeweils ein Gegenhalteflansch 26' bzw. 29' benachbart.

Der Stößel 18' ist an einander diametral gegenüberliegenden Seiten im Bereich des Reibungskolbens 25' mit Schlitzen 55 versehen. Außerdem sind noch zwei einander gegenüberliegende Umfangsschlitze 56 vorgesehen, die zwischen der Auflagefläche 54 und dem Gegenhalteflansch 29' ausgebildet sind. Durch die Anordnung und Ausbildung dieser Schlitze 55,56 sind zwei einander diametral gegenüberliegende Stege 57 geschaffen, von denen der dem Innenraum 49 des Gehäuses 12 zugewandte Gegenhalteflansch 29' getragen wird. Diese Stege 57 liegen - wie insbesondere Fig. 8 erkennen läßt - in der zylindrischen Auflagefläche 54 für den Reibbelag 39. Durch diese Ausgestaltung sind nicht unmittelbar mit dem Gegenhalteflansch 29' verbundene Spreizbacken 58 für den Reibbelag 39 gebildet, die radial zur Achse 21 verschwenkbar sind. An den Innenseiten dieser Spreizbacken 58 sind Spreizflächen 38' ausgebildet, die sich konisch bzw. kegelstumpfförmig in Richtung auf die Gelenkhülse 19 verjüngen. Gegen diese Spreizflächen 38' liegt ein Spreizkeil 36' an, der mit einer Betätigungsstange 59 versehen ist, die sich konzentrisch zur Achse 21 erstreckt. Diese Betätigungsstange 59 liegt gegen einen Stellmotor 42 an, der unmittelbar benachbart zur Gelenkhülse 19 in einer angepaßten Ausnehmung 41' im Innenraum 35' des Stößels 18' radial und axial in Richtung zur Gelenkbüchse 19 fest abgestützt ist. Die elektrischen Leitungen 46 sind durch eine ebenfalls gleichzeitig als Entlüftungsöffnung dienende Öffnung 47' nach außen geführt.

Auf der dem Stellmotor 42 abgewandten Seite ist der Spreizkeil 36' gegen eine vorgespannte SchraubenDruckfeder 60 abgestützt, die wiederum gegen ein im zugeordneten Endbereich 53' des Stößels 18' festgelegtes Widerlager 61 abgestützt ist. Dieses Widerlager 61 wird im wesentlichen durch ein Verriegelungsteil 62 gebildet, das quer zur Achse 21 in den Endbereich 53' einschiebbar und elastisch verriegelbar ist. Zwischen diesem Verriegelungsteil 62 und der Druckfeder 60 ist eine Stützscheibe 63 angeordnet. Auch hier erfolgt das Spreizen des Reibbelages 39 durch Verschieben des Spreizkeils 36' durch die Druckfeder 60 in Richtung zum Stellmotor 42 hin, während die Reduktion der Spreizung des Reibbelages 39 und damit die Reduktion der Reibungskraft zwischen dem Reibbelag 39 und der Innenwand 27 des Gehäuses 12 durch Stromzufuhr zur Heizung 45 des Stellmotors 42 und dadurch verursachtes Ausfahren des Kolbens 44 aus dessen Gehäuse 43 bewirkt wird.

Zur Ansteuerung des jeweiligen Stellmotors 42 dient eine Drehzahl-Erfassungseinrichtung 64, die nach Überschreiten einer vorgegebenen Drehzahl, und zwar der kritischen Drehzahl des gesamten Schwingungssystems, eine Stromzufuhr zu den elektrischen Heizungen 45 auslöst mit der Folge, daß die Reibung zwischen Reibbelag 39 und Innenwand 27 des Gehäuses 12 in der bereits geschilderten Weise reduziert wird. Die Dämpfungswirkung der Schwingungsdämpfer 11 bzw. 11' wird also reduziert.

## Patentansprüche

1. Reibungs- Schwingungsdämpfer, insbesondere für Waschmaschinen mit schwingungsfähiger Abstützung eines Waschaggregates (2), mit einem etwa rohrförmigen Gehäuse (12) und einem einseitig in dieses eintauchenden und in diesem in Richtung einer gemeinsamen Achse (21) verschiebbaren Stößel (18'), wobei an den einander abgewandten Enden des Gehäuses (12) und des Stößels (18') jeweils ein Anlenkelement (Gelenkbüchsen 15, 19) vorgesehen ist, und wobei am Stößel (18') ein mit einem Reibbelag (39) an der Innenwand (27) des Gehäuses (12) anliegender Reibungskolben (25') ausgebildet ist, der mittels eines im Stößel (18') angeordneten, linear wirkenden Stellmotors (42) aufweitbar ist, dadurch gekennzeichnet, daß der Reibungskolben (25') einstückig mit dem Stößel (18') ausgebildet und durch Schlitze (55,56) zur Bildung von in radialer Richtung verschwenkbaren Spreizbacken (58) für den Reibbelag (39) unterteilt ist, die auf ihrer radialen Innenseite mit sich zur Adise (21) hin konisch verjüngenden Spreizflächen (38') versehen sind, gegen die ein Spreizglied (36') anliegt, das mit dem Stellmotor (42) zur Verschiebung in Richtung der Achse (21) gekoppelt ist.

2. Schwingungsdämpfer nach Anspruch 1, dadurch gekennzeichnet, daß der Stellmotor (42) durch ein elektrisch beheizbares Dehnstoffelement gebildet ist, das aus einem Dehnstoff, der sich bei Erwärmung ausdehnt, einem mit dem Dehnstoff gefüllten Gehäuse (43) und einem im Gehäuse (43) verschiebbaren Kolben (44) besteht, der in seiner Lage relativ zum Gehäuse (43) bei Beheizung des Dehnstoffelementes veränderbar ist.

3. Schwingungsdämpfer nach Anspruch 2, dadurch gekennzeichnet, daß der Kolben (44) des Stellmotors (42) direkt gegen ein zum Aufspreizen des Reibungskolbens (25') dienendes Spreizglied (36') anliegt.

4. Schwingungsdämpfer nach einem der Ansprüche 1 bis 3, dadurch gekennzeichnet, daß der Stellmotor (42) benachbart zum Reibungskolben (25) im Stößel (18) angeordnet ist.

5. Schwingungsdämpfer nach einem der Ansprüche 1 bis 3, dadurch gekennzeichnet, daß der Stellmotor (42) benachbart zum Anlenkelement (19) des Stößels (18') angeordnet ist.

6. Schwingungsdämpfer nach einem der Ansprüche 1 bis 5, dadurch gekennzeichnet, daß der Stellmotor (42) in einer Ausnehmung (41') des Stößels (18') radial und axial in Richtung zum Anlenkelement (19) abgestützt ist.

7. Schwingungsdämpfer nach den Ansprüchen 3 und 5, dadurch gekennzeichnet, daß das Spreizglied (36') mit einer gegen den Kolben (44) anliegenden Betätigungsstange (59) versehen ist.

8. Schwingungsdämpfer nach einem der Ansprüche 3 bis 7, dadurch gekennzeichnet, daß gegen das Spreizglied (36') eine einer Verstellkraft des Kolbens (44) entgegenwirkende, sich gegen ein Widerlager (61) im Stößel (18') abstützende vorgespannte Druckfeder (60) anliegt.

9. Schwingungsdämpfer nach einem der Ansprüche 2 bis 8, dadurch gekennzeichnet, daß eine elektrische Leitung (46) zur Stromversorgung einer elektrischen Heizung (45) des Dehnstoffelementes (42) benachbart zum Anlenkelement (19) vom Stößel (18') weggeführt ist.

10. Schwingungsdämpfer nach Anspruch 9, dadurch gekennzeichnet, daß die elektrische Leitung (46) am Stößel (18) bis in die Nähe des Anlenkelementes (19) befestigt ist.

## Claims

1. A frictional vibration damper, in particular for washing machines with a oscillatory support of a washer unit (2), with an approximately tubular housing (12) and with a tappet (18') plunging into the latter from one side and being displaceable in it in the direction of a common axis (21), an articulation element (articulated bushes 15, 19) being provided at the ends turned away from each other, of both the housing (12) and the tapped (18'), and a friction piston (25') bearing with a friction coating (39) on the internal wall (27) of the housing (12) being formed on the tappet (18'), which friction piston (25') is extendable by means of a linearly operating servomotor (42) disposed in the tappet (18'), characterized in that the friction piston (25') is formed integrally with the tappet (18') and is subdivided by slots (55, 56) for the forming of expansion jaws (58) for the friction coating (39), which are pivotable in the radial direction and which are provided with expansion surfaces (38') conically tapering towards the axis (21) on their radial inside, an expansionmember (36') bearing against the expansion surfaces (38) and being coupled with the servomotor (42) for displacement in the direction of the axis (21).

2. A vibration damper according to claim 1, characterized in that the servomotor (42) is formed by an electrically heatable thermoactuator element comprising a thermoactuator, which expands upon heating, a housing (43) filled with the thermoactuator and a piston (44), which is displaceable in the housing (43) and the position of which referred to the housing (43) is changeable upon heating of the thermoactuator element.

3. A vibration damper according to claim 2, characterized in that the piston (44) of the servomotor (42) directly bears against an expansion member (36') serving to expand the friction piston (25').

4. A vibration damper according to one of the claims 1 to 3, characterized in that the servomotor (42) is arranged adjacent to the friction piston (25) in the tappet (18).

5. A vibration damper according to one of the claims 1 to 3, characterized in that the servomotor (42) is arranged adjacent to the articulation element (19) of the tappet (18').

6. A vibration damper according to one of the claims 1 to 5, characterized in that the servomotor (42) is supported radially in a recess (41') of the tappet (18') and axially in the direction towards the articulation element (19).

7. A vibration damper according to the claims 3 and 5, characterized in that the expansion member (36') is provided with an operating rod (59) bearing against the piston (44).

8. A vibration damper according to one of the claims 3 to 7, characterized in that a prestressed compression spring (60) acting against the displacing force of the piston (44) and bearing against an abutment (61) in the tappet (18') bears against the expansion member (36').

9. A vibration damper according to one of the claims 2 to 8, characterized in that an electric lead (46) for the supply of an electric heating (45) of the thermoactuator element (42) with current is guided adjacent to the articulation element (19) away from the tappet (18').

10. A vibration damper according to claim 9, characterized in that the electric lead (46) is secured to the tappet (18) as far as into the proximity of the articulation element (19).

## Revendications

1. Amortisseur de vibrations à friction, notamment pour des machines à laver comprenant un appui vibratoire de l'unité à laver (2), avec une boîte (12) à-peu-près tubulaire et avec un poussoir (18'), qui s'enfonce dans celle-ci d'un côté et qui est déplaçable dans celle-ci en sens d'un axe commun (21), un élément articulé (douilles articulées 15, 19) étant prévu aux extrémités opposées de la boîte (12) et du poussoir (18') et un piston à friction (25') étant prévu sur le poussoir (18'), dont une couche de friction (39) s'appuie contre la paroi intérieure (27) de la boîte (12) et qui est élargissable à l'aide d'un servomoteur (42) d'action linéaire arrangé dans le poussoir (18'), caractérisé en ce que le piston à friction (25') est formé d'une pièce avec le poussoir (18') et en ce qu'il est subdivisé par des fentes (55, 56) pour former des touches à expansion (58) radialement pivotantes pour la couche de friction (39), les touches à expansion (58), sur leur côté intérieur radial, étant pourvues de faces à expansion (38') effilées en cône vers l'axe (21), contre lesquelles un membre à expansion (36') s'appuie qui est jumelé au servomoteur (42) pour le déplacement en direction de l'axe (21).

2. Amortisseur de vibrations selon la revendication 1, caractérisé en ce que le servomoteur (42) est constitué par un élément thermoactionneur électriquement chauffable comprenant un agent thermoactionneur, qui se dilate lors d'un échauffement, par une boîte (43) remplie de l'agent thermoactionneur et par un piston (44), qui est déplaçable dans la boîte (43) et qui est variable en position par rapport à la boîte (43) lors de l'échauffement de l'élément thermoactionneur.

3. Amortisseur de vibrations selon la revendication 1, caractérisé en ce que le piston (44) du servomoteur (42) s'appuie directement contre un membre à expansion (36'), qui sert à élargir le piston à friction (25').

4. Amortisseur de vibrations selon l'une quelconque des revendications 1 à 3, caractérisé en ce que le servomoteur (42) est arrangé contigu au piston à friction (25) dans le poussoir (18).

5. Amortisseur de vibrations selon l'une quelconque des revendications 1 à 3, caractérisé en ce que le servomoteur (42) est arrangé contigu à l'élément d'articulation (19) du poussoir (18').

6. Amortisseur de vibrations selon l'une quelconque des revendications 1 à 5, caractérisé en ce que le servomoteur (42) est supporté radialement dans un évidement (41') du poussoir (18') et axialement en direction de l'élément d'articulation (19).

7. Amortisseur de vibrations selon les revendications 3 et 5, caractérisé en ce que le membre à expansion (36') est pourvu d'une tige de commande s'appuyant contre le piston (44).

8. Amortisseur de vibrations selon l'une quelconque des revendications 3 à 7, caractérisé en ce qu'un ressort de pression (60), qui s'oppose à la force de déplacement du piston (44) et qui s'appuie contre une butée (61) dans le poussoir (18'), s'accote contre le membre à expansion (36').

9. Amortisseur de vibrations selon l'une quelconque des revendications 2 à 8, caractérisé en ce que une ligne électrique (46) pour l'alimentation en courant d'un chauffage électrique (45) du thermocouple (42) est guidée dans le voisinage du membre d'articulation (19) à l'écart du poussoir (18').

10. Amortisseur de vibrations selon la revendication 9, caractérisé en ce que la ligne électrique (46) est fixée au poussoir (18) jusqu'en proximité du membre d'articulation (19).
